# EUROPÄISCHE PATENTSCHRIFT

(11) **EP 1 713 659 B1**
(45) Veröffentlichungstag und Bekanntmachung des Hinweises auf die Patenterteilung: **24.02.2010**
(21) Anmeldenummer: 05706990.8
(22) Anmeldetag: 25.01.2005
(51) Int. Cl.: B60N 2/225

(54) **BESCHLAG FÜR EINEN FAHRZEUGSITZ**
FITTING FOR A VEHICLE SEAT
ACCESSOIRE POUR UN SIEGE DE VEHICULE

(30) Priorität: 12.02.2004 DE 102004007043
(43) Veröffentlichungstag der Anmeldung: 25.10.2006
(73) Patentinhaber: KEIPER GmbH & Co. KG, 67657 Kaiserslautern (DE)
(72) Erfinder: SCHOLZ, Grit, 42853 Remscheid (DE); LEHMANN, Ulrich, 53347 Alfter-Bonn (DE); FINNER, Holger, 42499 Hückeswagen (DE); VEDDER, Andreas, 42781 Haan (DE)
(74) Vertreter: Patentanwälte Hosenthien-Held und Dr. Held
(86) Internationale Anmeldenummer: PCT/EP2005/000677
(87) Internationale Veröffentlichungsnummer: WO 2005/077707

(56) Entgegenhaltungen:
- DE-A1- 10 144 840
- DE-A1- 19 938 666
- DE-C1- 19 517 441

## Beschreibung

Die Erfindung betrifft einen Beschlag für einen Fahrzeugsitz mit den Merkmalen des Oberbegriffs des Anspruches 1.

Aus der DE 199 38 666 A1 ist ein Beschlag dieser Art bekannt, bei dem der für den Antrieb notwendige Exzenter im wesentlichen durch den radial innen angeordneten Mitnehmerring und die zwei radial außerhalb davon angeordneten Keilsegmente defmiert wird. Der Mitnehmerring und eine Mitnehmerbuchse zum Antrieb des Exzenters sind mittels einer Aussparung bzw. zweier Nasen drehfest miteinander verbunden. Die Keilsegmente liegen an einer radial außerhalb angeordneten Gleitlagerbuchse des zweiten Beschlagteils an und gleiten bei der Abwälzbewegung mit geringer Reibung an dieser entlang. Ein Beschlag von ähnlicher Bauweise ist in der DE 101 44 840 A1 beschrieben, wobei bei diesem der Mitnehmerring und die Mitnehmerbuchse mittels eines Übertragungsprofils drehfest miteinander verbunden sind.

Der Erfindung liegt die Aufgabe zu Grunde, einen alternativen Aufbau zu einem Beschlag der eingangs genannten Art zu finden. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, daß der Mitnehmerring die Keilsegmente umschließt, d.h. der Mitnehmerring radial außerhalb der Keilsegmente angeordnet ist, können sich Vorteile für die Kräfteverhältnisse ergeben, wobei sich durch die Anlage der Keilsegmente jeweils auf ihrer Außenseite mit wenigstens einer äußeren Traglinie am Mitnehmerring ein definierter Kontakt ergibt, aufgrund dessen die Kraftrichtungen und Winkelverhältnisse im Hinblick auf den Getriebeeingriff und die Selbsthemmung optimiert werden können. Die Traglinie, die ortsfest an den Keilsegmenten oder dem Mitnehmerring ausgebildet ist, sorgt dabei für eine von äußeren Kräften unabhängige Linienberührung und dient der Spielfreistellung. Statt einem einzigen Mitnehmerring können beispielsweise auch zwei axial versetzte Mitnehmerringe vorgesehen sein.

Von den zwei Keilsegmenten, die mit ihrer Innenseite vorzugsweise am ersten Beschlagteil gelagert sind, liegt jedes auf seiner Außenseite vorzugsweise mit einer äußeren Traglinie am Mitnehmerring an, während es vorzugsweise mittels zweier innerer Traglinien an einem Kragenzug des Beschlagteils anliegt. Letzteres führt zu einer definierten Ausrichtung der Keilsegmente relativ zu diesem Beschlagteil. In Umfangsrichtung des Kragenzuges ist vorzugsweise je eine Traglinie des Paares vor und hinter der einzelnen Traglinie angeordnet.

Der Mitnehmerring ist vorzugsweise mittels eines Gleitlager (mit geringer Reibung) drehbar gelagert, insbesondere in einer Gleitlagerbuchse gelagert, womit sich eine leichtgängige Abwälzbewegung der beiden Beschlagteile ergibt. Durch ein elastisches Element zwischen Gleitlager und zweitem Beschlagteil können Drehmomentspitzen reduziert werden, die beim Betätigen ohne Last beim Durchfahren enger Stellen auftreten, so daß die Spitzenbelastung der einzelnen Bauteile verringert und damit die Verschleiß-Lebensdauer verlängert wird.

Die Reibung zwischen dem Mitnehmerring und dem ihm benachbarten Beschlagteil, d.h. insbesondere zwischen dem Mitnehmerring und der dem zweiten Beschlagteil zugeordneten Gleitlagerbuchse, ist vorzugsweise kleiner als die anderen auftretenden Reibpaarungen, beispielsweise zwischen dem Mitnehmerring und den Keilsegmenten und und zwischen den Keilsegmenten und dem ihnen benachbarten Beschlagteil, d.h. insbesondere zwischen den Keilsegmenten und dem dem ersten Beschlagteil zugeordneten Kragenzug. Dabei sind die Keilsegmente vorzugsweise auf beiden Seiten, d.h. innen und außen, mittels einer Materialpaarung "Stahl auf Stahl" (gefettet) gelagert.

Eine zum Antrieb des Exzenters vorgesehene Mitnehmerbuchse und der Mitnehmerring können einstückig oder gesondert ausgebildet sein, wobei sie in letzterem Fall drehfest zusammenwirken. Die gesonderte Ausbildung kann die Montage vereinfachen und eine unterschiedliche Materialauswahl ermöglichen. Aufgrund der Reibungserfordernisse und Keilsegment-Mitnahme ist der Mitnehmerring vorzugsweise aus Stahl oder einem anderen, vorzugsweise gesinterten metallischen Werkstoff ausgebildet. Im Hinblick auf eine Vereinfachung der Montage genügt es, wenn der Mitnehmerring lediglich über den Umfang der Keilsegmente hinweg vorgesehen ist, also nicht vollständig geschlossen ist, solange das drehfeste Zusammenwirken mit der Mitnehmerbuchse gewährleistet ist.

Das drehfeste Zusammenwirken von Mitnehmerbuchse und Mitnehmerring mittels eines Übertragungsprofils hat den Vorteil, daß höhere Lasten über diese Verbindung übertragen werden können. Dies verbessert die Einsatzmöglichkeit des Beschlags als motorisch einstellbarer Beschlag und reduziert die Spitzenbelastung der einzelnen Bauteile. Im Regelfall mit zwei erfindungsgemäßen Beschlägen und einer gemeinsamen Antriebswelle ist eine zuverlässige Synchronisierung bei der Montage der Antriebswelle möglich.

Der erfindungsgemäße Beschlag ist vorzugsweise für einen motorischen Antrieb ausgelegt, kann jedoch auch manuell angetrieben werden. Die Erfindung ist auch bei anderen motorisch oder manuell angetriebenen Getriebebeschlägen verwendbar, unabhängig davon, ob ein Exzenter aus Keilen oder ein Festexzenter vorgesehen ist.

Im folgenden ist die Erfindung anhand eines in der Zeichnung dargestellten Ausführungsbeispiels näher erläutert. Es zeigen
- Fig. 1: eine Explosionsdarstellung des Ausführungsbeispiels, wobei die Mit- nehmerbuchse aus einer anderen Blickrichtung dargestellt ist,

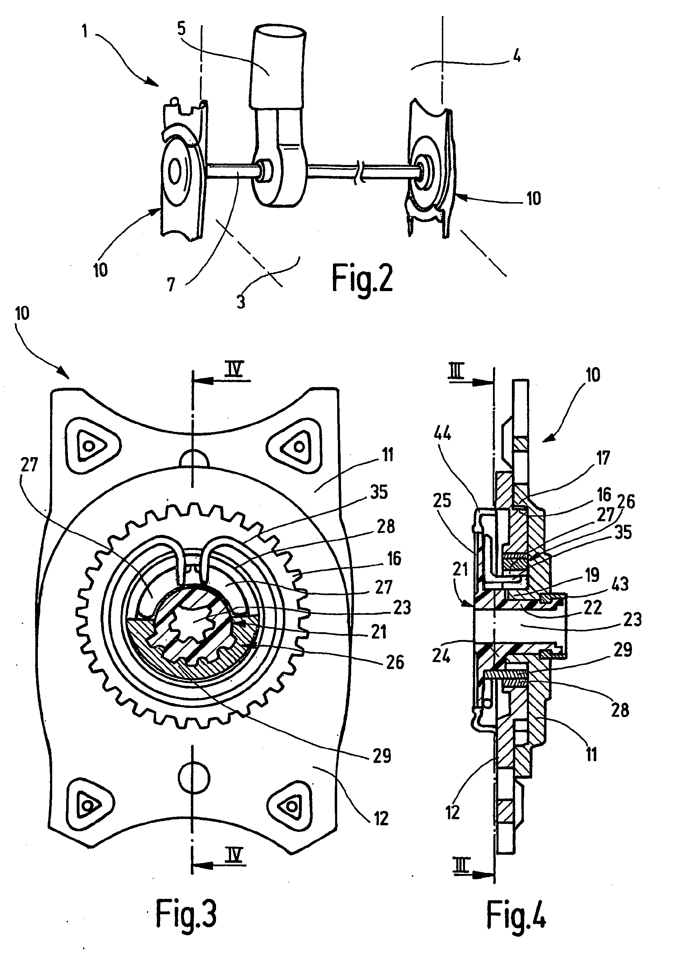

- Fig. 2: eine schematische Darstellung eines Fahrzeugssitzes mit zwei erfindungsge- mäßen Beschlägen,
- Fig. 3: einen Radialschnitt durch das Ausführungsbeispiel entlang der Linie III-III in Fig. 4,
- Fig. 4: einen Axialschnitt durch das Ausführungsbeispiel entlang der Linie IV-IV in Fig. 3, und
- Fig. 5: eine vergrößerte Ansicht eines Keilsegmentes mit Teilen des Kragenzuges und des Mitnehmerringes.

Ein in der Zeichung nur angedeuteter Fahrzeugsitz 1 für ein Kraftfahrzeug weist ein Sitzteil 3 und eine relativ zum Sitzteil 3 in ihrer Neigung motorisch einstellbare Lehne 4 auf. Als Antrieb für die Neigungseinstellung ist ein Elektromotor 5 vorgesehen, welcher an der Struktur der Lehne 4 angebracht ist. Der Elektromotor 5 dreht eine Antriebswelle 7, welche horizontal im Übergangsbereich zwischen Sitzteil 3 und Lehne 4 angeordnet ist. Auf beiden Seiten des Fahrzeugsitzes 1 greift die Antriebswelle 7 auf eine später beschriebene Weise drehfest in einen Beschlag 10 ein.

Der Beschlag 10 ist als Getriebebeschlag ausgebildet, bei welchem ein erstes Beschlagteil 11 und ein zweites Beschlagteil 12 über ein Getriebe zum Verstellen und Feststellen miteinander verbunden sind. Die beiden Beschlagteile 11 und 12 weisen eine im wesentlichen flache Form auf und bestehen aus Stahl. Das erste Beschlagteil 11 ist fest mit der den antreibenden Elektromotor 5 tragenden Struktur (vorliegend der Struktur der Lehne 4) verbunden, weshalb im Ausführungsbeispiel das erste Bauteil 11 lehnenfest und daher in der Zeichnung oben dargestellt ist. Entsprechend ist das zweite Beschlagteil 12 im Ausführungsbeispiel sitzteilfest und in der Zeichnung unten dargestellt. Bei einer anderen Anordnung des Elektromotors und bei manuell angetriebenen Beschlägen können die Positionen der Beschlagteile 11 und 12 ausgetauscht sein.

Zur Ausbildung des Getriebes ist am zweiten Beschlagteil 12 ein Zahnrad 16 mit einer Außenverzahnung und am ersten Beschlagteil 11 ein Zahnkranz 17 mit einer Innenverzahnung ausgeprägt, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Der entsprechende Unterschied der Zähnezahl von Zahnrad 16 und Zahnkranz 17 ermöglicht eine Abwälzbewegung des Zahnkranzes 17 am Zahnrad 16.

Das erste Beschlagteil 11 weist auf der dem Zahnrad 16 zugewandten Seite konzentrisch zur Innenverzahnung des Zahnkranzes 17 einen angeformten Kragenzug 19 auf. Im Kragenzug 19 ist mit Spiel eine Mitnehmerbuchse 21 mittels einer Nabe 22 gelagert. Die aus Kunststoff oder Stahl bestehende Mitnehmerbuchse 21 ist zentral mit einer zu einem Keilwellenprofil der Antriebswelle 7 passenden Bohrung 23 versehen. Im Anschluß an ihre Nabe 22 weist die Mitnehmerbuchse 21 eine Abstufung 24 mit größeren Durchmesser als die Nabe 22 und daran anschließend eine Abdeckscheibe 25 mit größerem Durchmesser als die Abstufung 24 auf.

Über einen Teil ihres Umfangs hinweg weist die Abstufung 24 eine radial nach außen gerichtete Außenverzahnung 24' auf, in deren Bereich sie einen Mitnehmerring 26 aus Stahl aufnimmt, welcher bereichsweise eine Innenverzahnung 26' aufweist, die formschlüssig und vollständig in die Außenverzahnung 24' greift, wodurch ein Übertragungsprofil definiert ist. Anstelle der Verzahnungen sind auch andere formschlüssige Übertragungsprofile mit Rippen, Polygonzügen oder dergleichen möglich. Zur Spielbeseitigung in der formschlüssigen Verbindung zwischen Innenverzahnung 26' und Außenverzahnung 24' kann bei der Montage der Formschluß unter Verdrängung des Materials der Abstufung 24 erfolgen.

Der Mitnehmerring 26 umschließt in einer nachstehend genauer beschriebenen Weise zwei radial innerhalb desselben angeordnete Keilsegmente 27 aus Stahl, die in einer ebenfalls nachstehend genauer beschriebenen Weise auf der Außenseite des Kragenzuges 19 gelagert sind. Der Mitnehmerring 26 wiederum lagert auf seiner Außenseite eine direkt oder unter Zwischenlage eines elastischen Elementes in das zweite Beschlagteil 12 drehfest eingepreßte Gleitlagerbuchse 28. Ferner weist der Mitnehmerring 26 ein axial vorspringendes, zwischen die Schmalseiten der Keilsegmente 27 mit Spiel fassendes Mitnehmersegment 29 auf, welches auf seiner radial nach innen weisenden Seite die Innenverzahnung 26' trägt. Das Mitnehmersegment 29, die Abstufung 24 der Mitnehmerbuchse 21 und ein Abschnitt der Bohrung 23 samt Antriebswelle 7 liegen somit in einer Ebene, was mehrachsige Spannungszustände vermeidet. Auf der Innenseite der Abdeckscheibe 25 der Mitnehmerbuchse 21 sind zwei abstehende Zapfen 32 oder allgemein Nocken angeformt, welche stirnseitig jeweils an einem der beiden Keilsegmente 27 anliegen und dieses in axialer Richtung sichern.

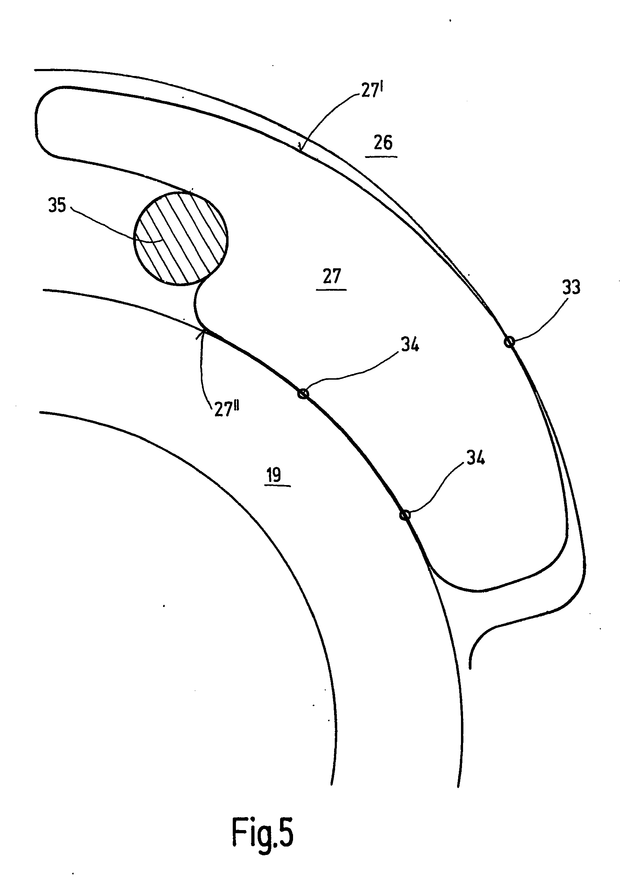

Bedingt durch eine von der Kreisbogen- bzw. Zylinderform abweichende Geometrie ihrer konvexen Außenseiten 27' und konkaven Innenseiten 27" liegen die Keilsegmente 27 mit ihren Außenseiten 27' nicht flächig an der Innenfläche des Mitnehmerrings 26 und mit ihren Innenseiten 27" nicht flächig am Kragenzug 19 an, sondern auf der Außenseite 27' nur an wenigstens einer äußeren Traglinie 33 bzw. an der Innenseite 27" nur an wenigstens einer, vorliegend zwei inneren Traglinien 34. Diese Traglinien 33 und 34 sind als ortfeste Geometerieüberhöhungen ausgebildet, beispielsweise in einer Art flachen Wellenform, und sorgen für eine von den äußeren Kräften unabhängige Linienberührung der Keilsegmente 27 am Kragenzug 19 bzw. Mitnehmerring 26. Die Anlage mittels Traglinien 33 und 34 dient der Spielfreistellung und der gezielten Steuerung der Kraftrichtungen und Winkelverhältnisse in der Lagerstelle. Damit hat man die Möglichkeit, den für das Steuerverhalten der Keilsegmente 27 in Kombination mit den vorhandenen Reibwertpaarungen wirksamen Keilwinkel gezielt einzustellen, so daß der Zahneingriff zwischen Zahnrad 16 und Zahnkranz 17 und die Selbsthemmung des Beschlags 10 optimiert werden können. In Fig. 5 verlaufen die Traglinien 33 und 34 senkrecht zur Zeichenebene, d.h. in axialer Richtung. In Umfangsrichtung betrachtet befindet sich vorliegend je eine innere Traglinie 34 vor und hinter der äußeren Traglinie 33. Die zwei inneren Traglinien 34 dienen außer zur Spielfreistellung noch zur Erhöhung der Festigkeit. Die einander zugekehrten Breitseiten der Keilsegmente 27 nehmen mit je einer durch vorspringende Materialpartien definierten Ausnehmung jeweils einen abgewinkelten Endfinger einer Ringfeder 35 auf, welche die Keilsegmente 27 in Umfangsrichtung auseinanderdrückt, wobei bei einer Blockage der Keilsegmente 27 im Betrieb oder einem Anlaufen der Lehne 4 gegen eine Last die radial äußeren, vorspringenden Materialpartien einander berühren und beaufschlagen können.

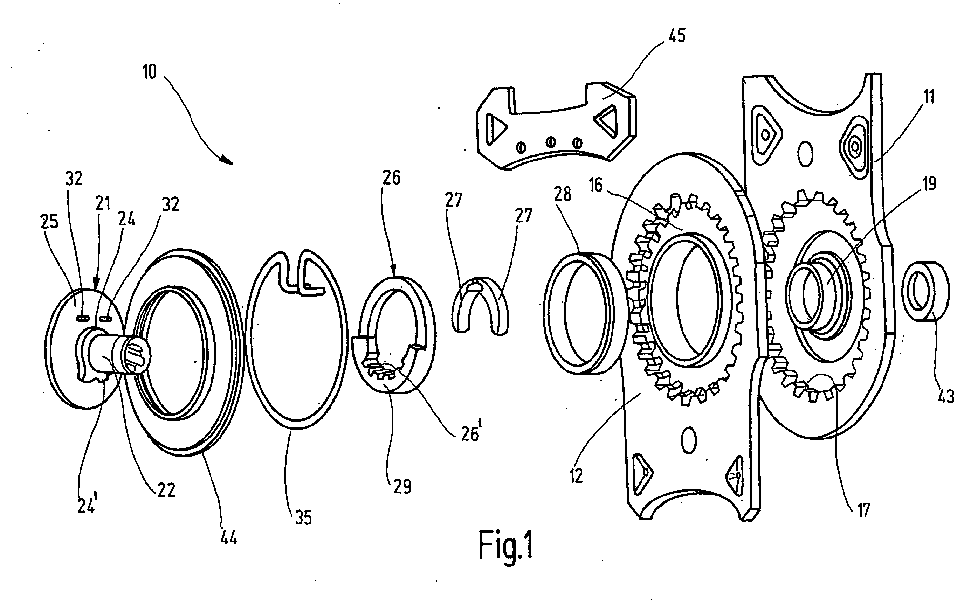

Die Mitnehmerbuchse 21 wird auf der Außenseite des ersten Beschlagteils 11 durch einen aufgeclipsten Sicherungsring 43 axial gesichert. Auf der Außenseite des zweiten Beschlagteils 12 ist zwischen der Ausprägung für das Zahnrad 16 und der Abdeckscheibe 25 der Mitnehmerbuchse 21 ein Dichtring 44 vorgesehen. Zur Aufnahme der axial wirkenden Kräfte ist an den beiden Beschlagteilen 1 1 und 12 je ein Halteblech 45 angeschweißt, welches das jeweils andere Beschlagteil übergreift, ohne die Einstellbewegung zu behindern. Der Übersichtlichkeit halber ist nur in Fig. 1 eines dieser Haltebleche 45 dargestellt.

Durch den Mitnehmerring 26 und die Keilsegmente 27 wird ein Exzenter definiert, welcher in Verlängerung der Richtung der Exzentrizität das Zahnrad 16 an einer so definierten Eingriffsstelle in den Zahnkranz 17 drückt. Bei einem Antrieb durch die sich drehende Antriebswelle 7 wird ein Drehmoment zunächst auf die Mitnehmerbuchse 21 und dann auf den so definierten Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt. Die Gleitlagerbuchse 28 definiert eine äußere Gleitfläche für den Exzenter, während der Kragenzug 19 eine innere Gleitfläche für den Exzenter definiert, wobei der Exzenter bei der Abwälzbewegung an den Gleitflächen entlanggleitet. Die Reibung zwischen der Gleitlagerbuchse 28 und dem Mitnehmerring 26 ist vorzugsweise deutlich kleiner als diejenige zwischen den Keilsegmenten 27 und dem Kragenzug 19 (Stahl auf Stahl, gefettet) und als diejenige zwischen dem Mitnehmerring 26 und den Keilsegmenten 27 (Stahl auf Stahl, gefettet), beispielsweise jeweils nur etwa ein Fünftel. Mit diesen Reibverhältnissen wird das Steuerverhalten der Keilsegmente 27 beeinflusst, welche beispielsweise mit dem Einsetzen des Antriebs ihre relative Ausrichtung zu den anderen Komponenten des Exzenters beibehalten.

In einer abgewandelten Ausführungsform sind die äußeren Traglinien 33 am Mitnehmerring 26 statt an den Keilsegmenten 27 ausgebildet.

### Bezugszeichenliste

- 1: Fahrzeugsitz
- 3: Sitzteil
- 4: Lehne
- 5: Elektromotor
- 7: Antriebswelle
- 10: Beschlag
- 11: erstes Beschlagteil
- 12: zweites Beschlagteil
- 16: Zahnrad
- 17: Zahnkranz
- 19: Kragenzug
- 21: Mitnehmerbuchse
- 22: Nabe
- 23: Bohrung
- 24: Abstufung
- 24': Außenverzahnung
- 25: Abdeckscheibe
- 26, 126: Mitnehmerring
- 26': Innenverzahnung
- 27: Keilsegment
- 27': Außenseite
- 27": Innenseite
- 28: Gleitlagerbuchse
- 29: Mitnehmersegment
- 32: Zapfen
- 33: äußere Traglinie
- 34: innere Traglinie
- 35: Ringfeder
- 43: Sicherungsring
- 44: Dichtring
- 45: Halteblech

## Patentansprüche

1. Beschlag für einen Fahrzeugsitz, insbesondere für einen Kraftfahrzeugsitz, mit einem ersten Beschlagteil (11), einem mit dem ersten Beschlagteil (11) in Getriebeverbindung stehenden zweiten Beschlagteil (12) und einem durch wenigstens einen Mitnehmerring (26) und zwei gegeneinander verspannte Keilsegmente (27) definierten Exzenter (26, 27) zum Antrieb einer Abwälzbewegung des zweiten Beschlagteils (12) am ersten Beschlagteil (11), **dadurch gekennzeichnet, daß** der Mitnehmerring (26) die Keilsegmente (27) umschließt, welche jeweils auf ihrer Außenseite mit wenigstens einer äußeren Traglinie (33) am Mitnehmerring (26) anliegen.

2. Beschlag nach Anspruch 1, **dadurch gekennzeichnet, daß** die Keilsegmente (27) mit ihrer Innenseite am ersten Beschlagteil (11) gelagert sind.

3. Beschlag nach Anspruch 2, **dadurch gekennzeichnet, daß** jedes Keilsegment (27) mittels zweier innerer Traglinien (34) an einem Kragenzug (19) des ersten Beschlagteils (11) anliegt, und daß für jedes Keilsegment (27) eine äußere Traglinie (33) vorgesehen ist, wobei in Umfangsrichtung des Kragenzugs (19) je eine innere Traglinie (34) vor und hinter der äußeren Traglinie (33) angeordnet ist.

4. Beschlag nach Anspruch 3, **dadurch gekennzeichnet, daß** die Reibung zwischen dem zweiten Beschlagteil (12) und dem Mitnehmerring (26) kleiner ist als diejenige zwischen den Keilsegmenten (27) und dem ersten Beschlagteil (11) und als diejenige zwischen dem Mitnehmerring (26) und den Keilsegmenten (27), der Mitnehmerring (26) in einem Gleitlager drehbar gelagert ist, insbesondere in einer Gleitlagerbuchse (28), welche dem zweiten Beschlagteil (12) zugeordnet ist.

5. Beschlag nach einem der Ansprüche 1 bis 4, **dadurch gekennzeichnet, daß** eine drehbar gelagerte, antreibbare Mitnehmerbuchse (21) zum Antrieb des Exzenters (26, 27) vorgesehen ist.

6. Beschlag nach Anspruch 5, **dadurch gekennzeichnet, daß** die Mitnehmerbuchse (21) und der Mitnehmerring (26) gesondert ausgebildet sind und drehfest zusammenwirken, wobei der Mitnehmerring (26) insbesondere aus Stahl ausgebildet ist.

7. Beschlag nach Anspruch 5 oder 6, **dadurch gekennzeichnet, daß** die Mitnehmerbuchse (21) zur drehfesten Aufnahme einer motorisch angetriebenen Antriebswelle (7) ausgelegt ist.

8. Fahrzeugsitz, insbesondere Kraftfahrzeugsitz, mit einem Sitzteil (3), einer relativ zum Sitzteil (3) neigungseinstellbaren Lehne (4) und wenigstens einem Beschlag (10) nach einem der Ansprüche 1 bis 7.

## Claims

1. A fitting for a vehicle seat, in particular for a motor vehicle seat, with a first fitting part (11), a second fitting part (12) in geared connection with the first fitting part (11) and an eccentric (26, 27), which is defined by at least one driving ring (26) and two wedge segments (27) which are braced against each other, for driving a rolling movement of the second fitting part (12) on the first fitting part (11), **characterized in that** the driving ring (26) encloses the wedge segments (27) which bear in each case on their outside with at least one outer supporting line (33) against the driving ring (26).

2. The fitting as claimed in claim 1, **characterized in that** the wedge segments (27) are mounted with their inside on the first fitting part (11).

3. The fitting as claimed in claim 2, **characterized in that** each wedge segment (27) bears by means of two inner supporting lines (34) against a collar formation (19) of the first fitting part (11), and **in that** an outer supporting line (33) is provided for each wedge segment (27), with one inner supporting line (34) in each case being arranged in front of and behind the outer supporting line (33) in the circumferential direction of the collar formation (19).

4. The fitting as claimed in claim 3, **characterized in that** the friction between the second fitting part (12) and the driving ring (26) is smaller than that between the wedge segments (27) and the first fitting part (11) and than that between the driving ring (26) and the wedge segments (27), the driving ring (26) is mounted rotatably in a sliding bearing, in particular in a sliding bearing bushing (28) which is assigned to the second fitting part (12).

5. The fitting as claimed in one of claims 1 to 4, **characterized in that** a rotatably mounted, driveable driving bushing (21) is provided for driving the eccentric (26, 27).

6. The fitting as claimed in claim 5, **characterized in that** the driving bushing (21) and the driving ring (26) are formed separately and interact in a rotationally fixed manner, the driving ring (26) being formed, in particular, from steel.

7. The fitting as claimed in claim 5 or 6, **characterized in that** the driving bushing (21) is configured for the rotationally fixed reception of a motor-driven drive shaft (7).

8. A vehicle seat, in particular motor vehicle seat, with a seat part (3), a backrest (4) which can be adjusted in inclination relative to the seat part (3), and at least one fitting (10) as claimed in one of claims 1 to 7.

## Revendications

1. Armature pour un siège de véhicule, en particulier pour un siège de véhicule automobile, avec une première partie d'armature (11), une deuxième partie d'armature (12) s'engrenant avec la première partie d'armature (11) et un excentrique (26, 27) défini par au moins une bague d'entraînement (26) et deux segments en forme de coin (27) tendus l'un par rapport à l'autre, pour la commande d'un mouvement de déroulement de la deuxième partie d'armature (12) sur la première partie d'armature (11), **caractérisée par le fait que** la bague d'entraînement (26) entoure les segments en forme de coin (27) dont chacun repose sur son côté extérieur sur la bague d'entraînement (26) par au moins une ligne de contact extérieure (33).

2. Armature selon la revendication 1, **caractérisée par le fait que** les segments en forme de coin (27) sont supportés sur la première partie d'armature (11) par leur côté intérieur.

3. Armature selon la revendication 2, **caractérisée par le fait que** chacun des segments en forme de coin (27) repose par deux lignes de contact intérieures (34) sur un collet (19) de la première partie d'armature (11) et **par le fait qu'**il est prévu, pour chacun des segments en forme de coin (27), une ligne de contact extérieure (33), une ligne de contact intérieure (34) étant disposée avant et après la ligne de contact extérieure (33) dans la direction de la circonférence du collet (19).

4. Armature selon la revendication 3, **caractérisée par le fait que** le frottement entre la deuxième partie d'armature (12) et la bague d'entraînement (26) est inférieur à celui entre les segments en forme de coin (27) et la première partie d'armature (11) et à celui entre la bague d'entraînement (26) et les segments en forme de coin (27) et **par le fait que** la bague d'entraînement (26) est montée rotative dans un palier lisse, en particulier dans un manchon de palier lisse (28), lequel est associé à la deuxième partie d'armature (12).

5. Armature selon l'une des revendications 1 à 4, **caractérisée par le fait qu'**il est prévu une douille d'entraînement (21) montée pivotante et pouvant être entraînée, pour l'entraînement de l'excentrique (26, 27).

6. Armature selon la revendication 5, **caractérisée par le fait que** la douille d'entraînement (21) et la bague d'entraînement (26) sont indépendantes et coopèrent en étant solidaires en rotation, la bague d'entraînement (26) étant en particulier fabriquée en acier.

7. Armature selon l'une des revendications 5 ou 6, **caractérisée par le fait que** la douille d'entraînement (21) est configurée pour recevoir de manière solidaire en rotation un arbre d'entraînement (7) entraîné par un moteur.

8. Siège de véhicule, en particulier siège de véhicule automobile, avec une partie d'assise (3), un dossier (4) pouvant se régler en inclinaison par rapport à la partie d'assise (3), et au moins une armature (10) selon l'une des revendications 1 à 7.
